# EUROPEAN PATENT APPLICATION

(11) **EP 1 315 147 A1**
(43) Date of publication of application: **28.05.2003**
(21) Application number: 01128163.1
(22) Date of filing: 27.11.2001
(51) Int. Cl.: G10L 15/18, H04L 12/28

(54) **Method for processing user requests with respect to a network of electronic devices**

(71) Applicant: Sony International (Europe) GmbH, 10785 Berlin (DE)
(72) Inventor: Torge, Sunna, Advanced Technology Center Stuttgart, Heinrich-Hertz-Str.1, 70327 Stuttgart (DE); Rapp, Stefan, Advanced Technology Center Stuttgart, Heinrich-Hertz-Str. 1, 70327 Stuttgart (DE)
(74) Representative: Müller - Hoffmann & Partner

(57) **Abstract**

To realize complex user wishes or tasks it is suggested in a method for serving user requests with respect to a network of devices to at least search for appropriate and necessary devices for fulfilling the request. Additionally, a necessary sequence of action is generated and derived to bring each of the necessary devices from the current state to a necessary initial state and then from said initial state to a final state. After the generation of said plan, the plan is executed.

## Description

The present invention relates to a method for serving user requests with respect to a network of devices and, more particular, to a method for operating a man-machine-interface unit in which complex user wishes or tasks can be realized.

Nowadays, a large variety of equipment and appliances employ man-machine-interface techniques, man-machine-dialogue systems, and/or the like, to ensure an easy and reliable use of the equipment and to increase the user's convenience, in particular in the field of network or home-network arrangements employing a variety of different devices connected thereto and offering a variety of possible services to the user.

In prior art methods and systems for serving user requests and/or for operating man-machine-interface units, in particular in the field of home networks, direct and more or less precise commands are expected by a dialogue manager of said man-machine-interface unit to map the received command uttered by a user directly to an action of a certain device. Therefore, in prior art methods and systems the user has to be aware of the devices and capabilities of the network and has to think in terms of concrete devices and actions.

It is an object of the present invention to provide a method for serving user requests with respect to a network of devices which can respond in a flexible and reliable manner to complex user wishes or tasks.

The object is achieved by a method for serving user requests with respect to a network of devices with the features of claim 1. Preferred embodiments of the inventive method for serving user requests with respect to a network of devices are within the scope of the dependent subclaims. Additionally, the object is achieved by a network of devices, a man-machine-interface unit or a system for controlling the same according to the features of claim 20 and by a computer program product according to the features of claim 21.

In the method for serving user requests with respect to a network of devices, or the like, in particular for controlling said network of devices, an user request is received and/or processed, thereby generating, and/or storing and/or employing request information data being representative for said user request. Additionally, device information data are generated and/or stored containing information at least of units and/or devices being necessary and/or appropriate with respect to said user request and/or being available for said man-machine-interface unit and/or containing information of possible states of said units and/or devices. Further, action information data containing information in accordance with said request information data, with respect to said device information data, and/or the like, about sequences of actions being appropriate with respect to said user request are generated and/or stored. Therefore, device information data are stored, containing information on the functionalities and the current states of all units/devices being available for e.g. a man-machine-interface. Given said request information data and said device information data action information data about sequences of actions being appropriate with respect to said user request are generated and stored.

Finally, at least one of said sequences of actions in accordance with said action information data is performed, so as to adequately respond to said user request.

It is therefore a basic idea of the inventive method to first receive and analyze a user request, and to derive therefrom request information data which describe and characterize the user request. From the received user request and the derived request information data it is decided which of the devices are appropriate and necessary for serving the request. Therefore, device information data are derived. That means, given the received user request and derived request information data, the device information data, which is stored, is used to decide which of the devices are appropriate and necessary for serving the request.

Then, a plan as a sequence of actions being appropriate with respect to the user request is constructed using the device information data of the appropriate and necessary devices for serving the request. Therefore, action information data are generated and stored, based on which at least one of said sequences of actions is carried out or executed to respond to said user request in an adequate form.

The invention may be embedded in a dialogue system, which consists of a speech or utterance recognizer, an understanding part, a dialogue manager, and a part realizing the inventive method.

In the context of the invention a user request is said to be complex if it is not a simple device instruction and/or if several devices are necessary to serve the request.

In contrast to prior art methods, the inventive method for serving user requests with respect to an network of devices is capable of serving complex user wishes or complex desired tasks, in particular in the case where a direct mapping of an order uttered by a user is not possible. For instance, the order "start CD-player" can be mapped and executed directly by feeding a start signal to the input terminal of the CD-player. In contrast, the task "I want to listen to Madonna's most recent single hit" cannot be mapped and executed in a direct way, as neither the device, nor the action to be executed on the device, nor the data source are given within the wording of the task. These items have to be derived in advance of the execution step and the inventive method for operating a man-machine-interface unit is in particular capable of coping with such complex user wishes or tasks.

Therefore, according to a preferred embodiment of the present invention, a complex user request representing a user's wish, a desired task, service, device and/or the like or a sequence or set thereof is received as said user request, in particular involving several necessary devices of said network.

A further idea is to receive in general a user utterance as an input, in particular in multimodal form, e.g. including acoustical components, gesture, facial expression and/or the like. A multi-modal user input as an utterance comprises components with several modalities.

According to a preferred embodiment of the inventive method for serving user requests with respect to a network of devices a user utterance or input, e.g. a speech input, is received as said user request. Speech is the easiest way for a user to utter a desired task, as already mentioned above.

The step of processing said user request comprises a step of recognizing and/ or understanding said user request and in the case of a spoken user request a step of speech recognition, especially combined with a step of user identification.

It is a benefit of the invention to generate an abstract representation for said user request.

In accordance with another preferred embodiment of the inventive method for serving user requests with respect to a network of devices said request information data are generated so as to contain primary data source information, primary data target information and/or primary action information.

Said primary data source information contains information on possible data sources for primary data to be received or to be generated. The primary data source information in the case of the above-mentioned task "listening to Madonna's most recent single hit" may contain information about a CD-player, a tape recorder, a broadcast system, or the like for providing the primary data, i. e. respective sound data of said most recent single hit of Madonna. Said primary data target information could contain in the above-mentioned case information about an amplifier unit and a loudspeaker unit of the network to which said data for an acoustical output of the respective song can be directed. The primary action information would be derived from the task component "listen to" and would contain information about a reproducing mode or playing mode of the respective devices.

In the above-mentioned case and similar cases primary data sources are devices which can provide data, e. g. sounds, video streams, or the like. Data targets are therefore devices to which the information or service from the data sources are transmitted to, e. g. a loudspeaker unit, a recording device, a displaying device, or the like. Finally, the action information describes actions to be taken on the data sources and the data targets to realize the transmission and transition of data between source and target.

Therefore, according to a preferred embodiment of the inventive method said primary data source information is generated so as to contain information at least indicating possible or potential sources of requested data and/or services. Further, said primary data target information is generated so as to contain information at least indicating possible or potential targets for requested and/or derived data and/or services. Furtheron, said primary action information is generated so as to contain information containing at least indicating possible or potential actions to be performed on requested and/or derived data and/or possible services.

In a particular advantageous embodiment of the inventive method said device information data are generated so as to contain device functionality data, in particular describing and/or representing possible functionalities of each device, and/or device status data describing and/or representing an initial, current and/or final statuses or states of at least said necessary and/or said appropriate devices.

It is preferred to employ a dialogue system, section, algorithm, or the like, in particular in the steps of deriving, storing and/or employing such device information data, said action information data, and/or the like.

It is further preferred to employ a planning module, section, algorithm, or the like, in particular as a part of said dialogue system, section, algorithm, or the like, and/or in particular containing function models, state models and/or a reasonning component.

Function models may be employed, in particular for each device in the network, in global form and/or in the steps of deriving, storing and/or employing said device information data, said action information data, and/or the like.

Each of said function models may be chosen so as to contain an external model being descriptive for data being transmitted to or from a respective device, device class, or the like.

Additionally or alternatively, each of said function models may be chosen to contain an internal model, in particular as a finite state automaton, or the like and/or being descriptive for possible states, possible transitions between states, of possible actions to initialize said state transitions for a respective device and/or the like.

Said function models may be chosen so as to contain a connection model, being representative for possible connections between involved devices.

According to a further preferred embodiment of the inventive method in the step of deriving said device information data, a device search algorithm is employed, in particular using said external models.

It is advantageous in accordance with another embodiment of the present invention to employ in the step of deriving said device information data a state search algorithm, in particular using said internal models and/or said state models.

Furtheron, in the step of deriving said action information data, an action search algorithm may be employed, in particular using said internal models and/or said reasonning component.

For executing a found plan, and therefore for responding to an user request an action performing algorithm may be employed, in particular in the step of performing one of said sequences of actions.

It is a further aspect of the present invention to provide a network of devices, a man-machine-interface unit and/or a system, an apparatus, a device, and/or the like for operating the same which is in each case capable of performing and/or realizing the inventive method for serving user requests with respect to a network of devices and/or the steps thereof.

Additionally, it is a further aspect of the present invention to provide a computer program product comprising computer program means which is adapted to perform and/or to realize the inventive method for serving user requests with respect to a network of devices and/or the steps thereof, when it is executed on a computer, a digital processing means, and/or the like.

The above-mentioned and further aspects of the present invention will become more elucidated taking into account the following remarks.

The problem to be addressed with the present invention is to enable a method and/or a system for operating a man-machine-interface unit, and in particular a dialogue system, to serve complex user wishes, requests and/or tasks.

Instead of controlling devices directly, the user is allowed to ask the system to serve complex tasks which may include the use of several devices. The functionality of each device is described by a finite state automaton. Given a complex user request, the following steps are to be automatically performed in order to serve the request: Search for appropriate and necessary devices; search for current and required states of each involved device; search for a plan or a sequence of actions to bring each device from a current state to the required state; perform the plan.

Conventional dialogue systems in man-machine-interface units which are used for controlling devices or networks of devices usually consist of an input recognition part, an input understanding part, a dialogue manager, and the devices to be controlled. Simple user requests can be performed by mapping the user input uniquely and directly to the appropriate control command.

Given e. g. a speech input "CD play", conventional systems uniquely can map this user request to the play command of a CD-player.

The main lack of most known user interfaces of traditional dialogue system is the necessity for the user to think in terms of devices, services and applications.

As an example consider the task "record the film XYZ". In this case the user might first use an EPG, i. e. an Electronic Program Guide, in order to find out the appropriate channel, starting time and duration. Then, the user needs to program the VCR himself.

According to the invention, the user is enabled to submit a (multi-modal) request to a system in terms of the task, as he would do in communication with a human assistant or counterpart. This means that the user asks the system to "record the film XYZ". Then the system in accordance with the invention itself has or derives the knowledge about how to find the appropriate channel, starting time and duration, for instance by using an EPG and then how to program the VCR automatically.

The problem to be addressed by the invention is the process of enabling a flexible and intuitive control and operation of devices, applications, and services by enabling the user to ask for complex tasks and to utter complex wishes instead of controlling single devices. Given a complex request, the inventive method for serving user requests with respect to a network of devices automatically recognizes the meaning of the request or wish, derives the necessary information concerning necessary devices and takes appropriate actions to respond to the request or wish.

In a preferred embodiment of the inventive method the following steps are included:
1. Searching for appropriate and necessary devices to serve the complex user wish.
2. Searching for current and required states of each of the involved devices.
3. Searching for a plan or a sequence of actions to bring each device from the current state to the required one.
4. Performing the plan or executing the sequence of actions.

This algorithm may be performed automatically by an appropriate inventive system. There is no need for further user input to trigger the use of different devices.

In the following the example of the home network may be considered, consisting for instance of a TV, VCR, a Set Top Box (STB), and an EPG (Electronic Program Guide). The man-machine-interface unit (MMI) includes a dialogue system. In prior art dialogue systems the given devices are controlled directly by the dialogue manager.

Instead, the idea according to the invention is to introduce a new module into said dialogue system. This new module is called planning module. The planning module may consist of an abstract model of the functionalities or of possible functions of each device (so-called functional models), and in particular for each device in the network. Furtheron, the planning module consists of an administration of the current state of each device and of a reasoning component, based on the functional models. This newly introduced model enables the system or the method for operating a man-machine-interface unit to serve complex user wishes instead of forcing the user explicitely to use devices and combine them.

The functional model of a device consists of two parts. The first part is an external model describing the in- and outgoing data with respect to the device. The second part is an internal model, for instance a finite state machine, a finite state automaton, or the like, describing the possible states of the device and their actions which may lead to state transitions. In addition, the states are annotated with in- and outgoing data.

In order to serve complex user requests like "record the film XYZ", the following steps need to be performed by the planning module: Finding out which devices are necessary to service the request (in the above-mentioned case an EPG and a VCR); finding out how the devices may be controlled.

The reasoning component of the planning module consists of:
1. An algorithm for the search of appropriate and necessary devices (device search algorithm). This is done by using the external models.
2. An algorithm for the search for the state of each of the involved devices, which need to be reached in order to serve the request (state search algorithm). This is done by using the internal model (i. e. the finite state automaton).
3. A planning algorithm to search for a plan or a sequence of actions to bring each of the involved devices from the current state to the required state. This is done by using the internal model of each involved device.
4. An algorithm to perform the plan or to perform the sequence of actions (performing algorithm).

The inventive method includes the use of
- an abstract model of the functionalities of each device in the network,
- a device search algorithm in order to find out which devices are necessary to serve a complex user request,
- a state search algorithm and a planning algorithm in order to find out how to control the devices, and
- a performing algorithm in order to control the devices as the generated plan requires.

The inventive method is not restricted to consumer-electronic devices but also may be applied to services like tourist information databases, e-mail exchange, telephone services, or the like.

Instead of controlling the devices directly from the dialogue manager as it is done in the prior art dialogue systems, the invention allows to formulate the requests given by the dialogue manager on a very abstract level. The execution of the request finally is performed by the planning module. The invention has the following advantages compared with prior art dialogue systems:
- The system itself searches for the devices, which are necessary to perform a given user request, i. e. the user does not need to think in terms of devices, but can think in terms of tasks and wishes.
- The dialogue manager is independent from the real devices and robust against changes of them.
- There might be several possible constellations of devices to serve a user request. With the device search algorithm the system is able to detect them, i. e. the user request is not fixed to a specific constellation of devices.
- The overall functionality of the given devices does not need to be known to the dialogue manager but it is deduced from the functional models or the given devices.
- The system is flexible and robust against adding and removing of devices.

The above-mentioned and further features and advantages of the invention will become more apparent from the following description taking into account the accompanying figures.
- **Fig. 1**: is a schematical block diagram elucidating a preferred embodi ment of the inventive method for operating a man-machine--interface unit.
- **Fig. 2**: is a schematical block diagram showing an application of the invention within a home network.
- **Fig. 3**: is a schematical block diagram of a dialogue system realizing an embodiment of the present invention.

- **Fig. 4**: is a schematical block diagram of an external model for an electronic program guide EPG.
- **Fig. 5**: is a schematical block diagram for an internal model for an electronic program guide EPG.
- **Fig. 6**: is an embodiment for a reasoning component of a planning module involved in an embodiment of the inventive method.

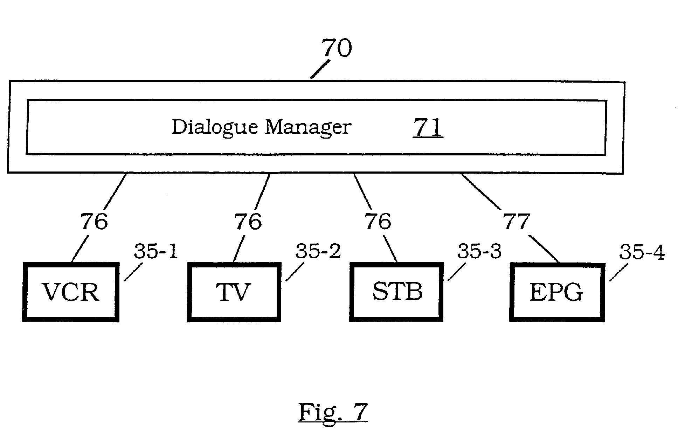

- **Fig. 7**: is a schematical block diagram of a prior art dialogue system for controlling a home network.

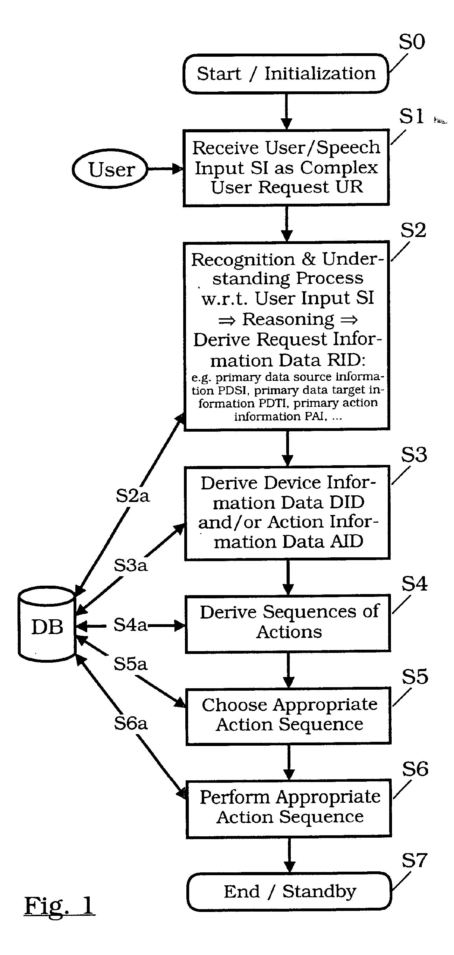

By means of a schematical block diagram Fig. 1 shows a first embodiment of the inventive method for serving user requests with respect to a network of devices and in particular a method for operating a man-machine-interface unit MMI.

In preliminary step S0 the method or system is started and initialized.

In a first step S1 a speech input S1 is received as a complex user request UR.

In the following step S2 a process of recognizing the utterance or user request is applied to the user input S1 to evaluate the user request UR, followed by a process of understanding and thereby deriving request information data RID, and in particular primary data source information PDSI, primary data target information PDTI and primary action information PAI. This process may be supported by a link S2a to a database DB.

In the following third step S3 from the request information data RID device information data DID and action information data AID are derived, which may be supported by taking reference to a database DB according to step S3a.

In the following fourth step S4 appropriate sequences of actions are derived which may serve as an adequate respond to the user request UR.

The following fifth step S5 performs an evaluation on the derived sequences of actions and chooses the most adequate particular action sequence, this process may be performed taking reference again with a database DB according to step S5a.

Then, the chosen action sequence is performed, carried out or executed.

In a final step S7 a method returns to the initial step S0 or remains in a stand by mode.

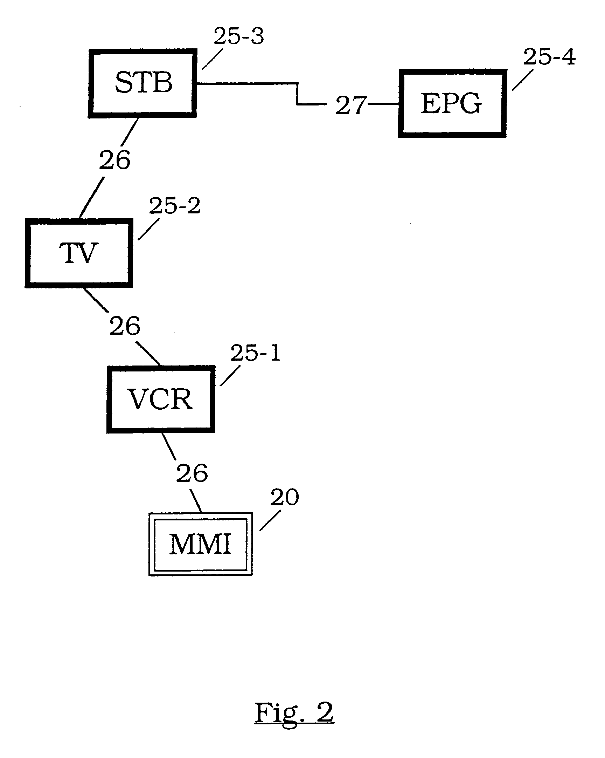

Fig. 2 describes by means of a schematical block diagram an application of an inventive method or operating a man-machine-interface unit MMI 20 within a home network. To the man-machine-interface unit MMI 20 an arrangement of devices 25-1 to 25-4 is connected by means of adequate connections 26 and 27. In particular a Video Cassette Recorder VCR 25-1, a TV-set TV 25-2, a Set Top Box STB 25-3, and an Electronic Program Guide EPG 25-4 are included in the home network system. The connection 27 between the network and the man-machine-interface MMI 20 may be built up by means of internet connection. The connections 26 may be built up as a bus system or an iLink/blue-tooth system.

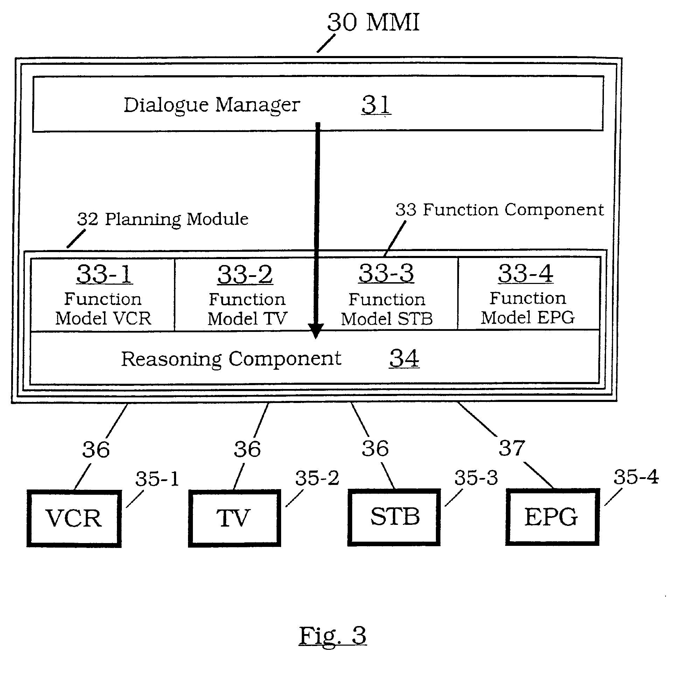

Fig. 3 shows by means of a schematical block diagram in more detail the connection between a man-machine-interface unit MMI 30 and a home network built up by a VCR 35-1, a TV 35-2, a STB 35-3 and an EPG 35-4, which are connected by connections 36 and 37, respectively.

The MMI 30 of the embodiment of Fig. 3 contains a dialogue manager 31 combined with a planning module 32. The planning module 32 itself is built up by a model component 33 which contains function models 33-1 to 33-4 for each of the devices 35-1 to 35-4 and a reasoning component 34.

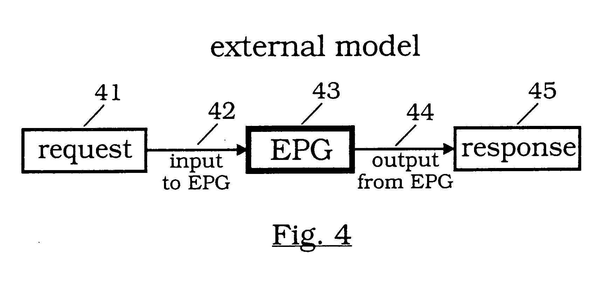

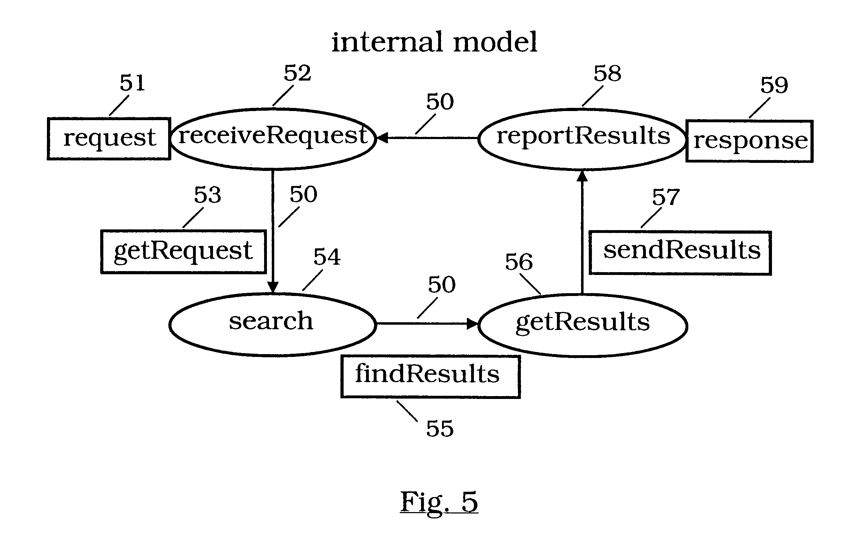

The structure of the function models 33-1 to 33-4 is explained for the case of an electronic program guide EPG by means of schematical block diagrams according to Figs. 4 and 5.

Each of said function models 33-1 to 33-4 contains an external model and an internal model.

Fig. 4 shows an example for an external model for the EPG 35-4 of Fig. 3. The external model for the EPG consists of annotated request information 41 and response information 45. The request information 41 is the input data 42 of an EPG, the response information 45 is the output data 44 of an EPG 43.

The internal model of the EPG-device of Fig. 3 may be described by four different states 52, 54, 56 and 58 corresponding to the states receiveRequest, search, getResults, and reportResults. These different states are connected in a circular arrangement by respective transitions 50. The states receiveRequest 52 and reportResults 58 are annotated with respective request information 51 and response information 59. The first three transitions are annotated with actions getRequest 53, findResults 55, and sendResults 57, which are to be performed in order to change the state.

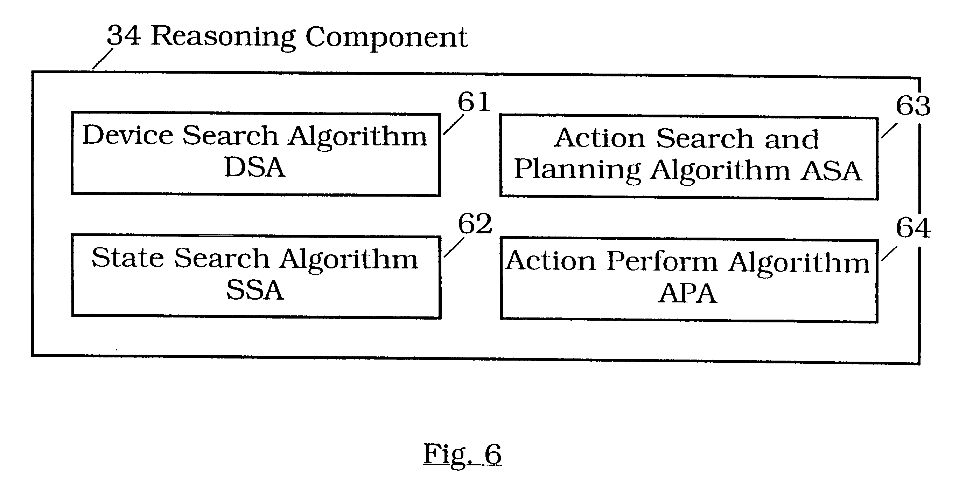

The schematical block diagram of Fig. 6 shows the structure of an example for a reasoning component 34 of a planning module 32 in a man-machine-interface unit MMI according to the invention and in particular according to Fig. 3. Such a reasoning component 34 consists of a device search algorithm DSA 61, a state search algorithm SSA 62, an action search or planning algorithm ASA 63, and an action performing algorithm APA 64.

In contrast, prior art MMIs 70 generally contain a single dialogue manager 71 and they are connected to the respective devices 35-1 to 35-4 via connections 76 and 77, respectively, without involving a respective planning module or a reasoning component.

## Claims

1. Method for serving user requests with respect to a network of devices or the like, in particular for controlling said network of devices, comprising the steps of:
- receiving (S1) and/or processing (S1, S2) a user request (UR) thereby generating and/or storing request information data (RID) being representative for said user request (UR),
- generating (S3) storing and/or employing device information data (DID) containing information at least of units and/or devices being necessary and/or appropriate with respect to said user request (UR) and/or being available for said man-machine-interface unit and/or containing information of possible states of said units and/or devices,
- generating (S4, S5) and/or storing action information data (AID) containing information in accordance with said request information data (RID), said device information data (DID), and/or the like about sequences of actions being appropriate with respect to said user request (UR),
- performing (S6) at least one of said sequences of actions in accordance with said action information data (AID), so as to adequately respond to said user request (UR).

2. Method according to claim 1, wherein a complex user request representing a user's wish, a desired task, service, device and/or the like or sequence or set thereof is received as said user request (UR), in particular involving several necessariy devices of said network.

3. Method according to any one of the preceding claims, wherein a user utterance is received as an input (S1), in particular in multimodal form.

4. Method according to any one of the preceding claims, wherein speech input (S1) is received as said user utterance, input (S1) or as said user request (UR).

5. Method according any one of the preceding claims, wherein said step of processing (S1, S2) said user request (UR) comprises a step of recognizing (S2) said user request (UR) and in particular a step of speech recognizing.

6. Method according to any one of the preceding claims, wherein an abstract representation is generated for said user request (UR).

7. Method according to any one of the preceding claims, wherein said request information data (RID) is generated so as to contain primary data source information (PDSI), primary data target information (PDTI) and/or primary action information (PAI).

8. Method according to claim 7,
- wherein said primary data source information (PDSI) is generated so as to contain information at least indicating possible or potential sources of requested data and/or services,
- wherein said primary data target information (PDTI) is generated so as to contain information at least indicating possible or potential targets for potential or derived data and/or services, and/or
- wherein said primary action information (PAI) is generated so as to contain information at least indicating possible or potential actions to be performed on requested and/or derived data and/or for said services.

9. Method according to anyone of the preceding claims, wherein said device information data (DID) contain device functionality data (DFD), in particular describing and/or representing possible functionalities of each device, and/or device status data (DSD), in particular describing and/or representing initial, current, and/or final statuses or states of at least said necessary and/or appropriate devices.

10. Method according to anyone of the preceding claims, wherein a dialogue system (30, 31), section, algorithm, or the like is employed, in particular in said steps of deriving (S3), storing and/or employing said device information data (DID), said action information data (AID), and/or the like.

11. Method according to anyone of the preceding claims, wherein a planning module (32), section, algorithm, or the like is employed, in particular as a part of said dialogue system (30, 31), section, algorithm, or the like, and/or in particular containing function models (33-1, ..., 33-4), state models and/ or a reasonning component (34).

12. Method according to anyone of the preceding claims, wherein function models (33-1, ..., 33-4) are employed, in particular for each device in the network, in global form and/or in the steps of deriving (S3), storing and/or employing device information data (DID), said action information data (AID), and/or the like.

13. Method according to claim 12, wherein each of said function models (33-1, ..., 33-4) is chosen to contain an external model being descriptive for data being transmitted to and/or from a respective device, device class, or the like.

14. Method according to anyone of the claims 12 or 13, wherein each of said function models (33-1, ..., 33-4) is chosen to contain an internal model, in particular as a finite state machine, finite state automaton, or the like and/ or being descriptive for possible states, of possible transitions between states, of possible actions to initialize said state transitions of said respective device, and/or the like.

15. Method according to any one of the claims 12 to 14, wherein each of said function models (33-1, ..., 33-4) is chosen to contain a connection model being representative for possible connections between involved devices.

16. Method according to anyone of the preceding claims, wherein in the step of deriving (S3) said device information data (DID) a device search algorithm (DSA) is employed, in particular using said external models.

17. Method according to anyone of the preceding claims, wherein in the step of deriving (S3) said device information data (DID) a state search algorithm (SSA) is employed, in particular using said internal models and/or said state models.

18. Method according to anyone of the preceding claims, wherein in the step of deriving (S3) action information data (AID) an action search algorithm (ASA) is employed, in particular using said internal models and/or said reasoning component (34).

19. Method according to anyone of the preceding claims, wherein in the step of performing one of the sequences of action an action performing algorithm (APA) is employed.

20. Network of devices, man-machine-interface unit or the like or system for operating the same which is capable of performing and/or realizing the method to any one of the preceding claims 1 to 19 and/or the steps thereof.

21. Computer program product, comprising computer program means adapted to perform and/or to realize the method according to any one of the preceding claims 1 to 19 and/or the steps thereof, when it is executed on a computer, a digital processing means and/or the like.
